# EUROPEAN PATENT APPLICATION

(11) **EP 3 451 163 A1**
(43) Date of publication of application: **06.03.2019**
(21) Application number: 16899907.6
(22) Date of filing: 05.05.2016
(51) Int. Cl.: G06F 9/302

(54) **DEVICE AND METHOD FOR USE IN EXECUTING MATRIX ADDITION/SUBTRACTION OPERATIONS**

(30) Priority: 26.04.2016 CN 201610266805
(71) Applicant: Cambricon Technologies Corporation Limited, Beijing 100190 (CN)
(72) Inventor: ZHANG, Xiao, Beijing 100190 (CN); LIU, Shaoli, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/081117
(87) International publication number: WO 2017/185396

(57) **Abstract**

A device for executing a matrix addition/subtraction operation is provided. The device for executing a matrix addition/subtraction operation includes a storage unit, a register unit, a controlling unit, and a matrix operation unit. The storage unit is configured to store matrix data associated with a matrix operation instruction. The register unit is configured to store scalar data associated with the matrix operation instruction. The controlling unit is configured to decode the matrix operation instruction and control the operation process of the matrix operation instruction. The matrix operation unit is configured to perform a matrix addition/subtraction operation on an inputting matrix according to the decoded matrix operation instruction. The matrix operation unit is a customized hardware circuit. A method for executing a matrix addition/subtraction operation is also provided.

## Description

### TECHNICAL FIELD

The present disclosure relates to the field of computers, and more particularly to a device and a method for executing a matrix addition/subtraction operation.

### BACKGROUND

In the current computer field, along with the maturity of emerging technologies such as big data and machine learning, more and more tasks include various matrix addition/subtraction operations, especially addition/subtraction operations of large matrices, which often become a bottleneck of improving algorithm speed and effect.

In the prior art, one solution to conduct matrix addition/subtraction operation is to use a general-purpose processor by executing a general instruction via general-purpose register file and general-purpose functional unit to perform matrix addition/subtraction operations. However, one defect of the solution is the low operation performance during matrix operation triggered because a single general-purpose processor is primarily used for scalar computation. On the other hand, when using multiple general-purpose processors for concurrent execution, the effect is not enough when the number of the general-purpose processors is not increased largely, and large numbers of the general-purpose processors may lead to a possible performance bottleneck resulting from the intercommunication among such processors.

In another prior art, matrix addition/subtraction computation is conducted by using graphics processing unit (GPU). General-purpose register file and general-purpose stream processing unit are used to execute general SIMD instructions, thereby performing matrix operation. Nonetheless, in the above-mentioned solution, GPU's on-chip small caching requires a constant transportation of off-chip data in performing large-scale matrix operations, which makes off-chip bandwidth a main performance bottleneck.

In another prior art, a specialized matrix operation device is used to perform matrix addition/subtraction computation. Customized register file and processing unit are used to perform matrix operation. Limited by the register file, however, the present specialized matrix operation device is unable to flexibly support matrix operations of different lengths.

In the prior art, clearly, either the multi-core general processor on chip, or the inter-chip interconnected general processor (single or multi core), or inter-chip interconnected graphics processor is unable to perform an efficient matrix addition/subtraction operation. Also, the current solutions, in performing matrix addition/subtraction operations, are burdened with excessive codes, limited inter-chip communication, insufficient on-chip cache, and inflexible matrix size.

### SUMMARY

Based on this, the present disclosure provides a device and a method for executing a matrix addition/subtraction operation.

According to an aspect of the present disclosure, there is provided a device for executing a matrix addition/subtraction operation. The device for executing a matrix addition/subtraction operation includes: a storage unit, a register unit, a controlling unit, and a matrix operation unit.

The storage unit is configured to store matrix data associated with a matrix operation instruction;

The register unit is configured to store scalar data associated with the matrix operation instruction.

The controlling unit is configured to decode the matrix operation instruction and control the operation process of the matrix operation instruction; and

The matrix operation unit is configured to perform a matrix addition/subtraction operation on an inputting matrix according to the decoded matrix operation instruction. The matrix operation unit is a customized hardware circuit.

According to another aspect of the present disclosure, there is provided a device for executing a matrix addition/subtraction operation. The device for executing a matrix addition/subtraction operation includes an instruction fetching unit, a decoding unit, an instruction queue unit, a scalar register file, a dependency relationship processing unit, a storage queue unit, a matrix operation unit, a Scratchpad Memory, and an input-and-output access unit.

The instruction fetching unit is configured to fetch a matrix operation instruction to be executed next time from an instruction sequence, and transmit the matrix operation instruction to the decoding unit.

The decoding unit is configured to decode the matrix operation instruction, and transmit the decoded matrix operation instruction to the instruction queue unit.

The instruction queue unit is configured to temporarily store the decoded matrix operation instruction, to obtain scalar data associated with the operation of the matrix operation instruction from the matrix operation instruction or the scalar register file, and to send the matrix operation instruction to the dependency relationship processing unit after obtaining the scalar data;

The scalar register file includes a plurality of scalar registers, configured to store the scalar data associated with the matrix operation instruction;

The dependency relationship processing unit is configured to determine whether the matrix operation instruction has a dependency on a previous uncompleted matrix operation instruction; to send the matrix operation instruction to the storage queue unit if the matrix operation instruction has a dependency on the previous uncompleted matrix operation instruction; to send the matrix operation instruction to the matrix operation unit if the matrix operation instruction dose not have a dependency on the previous uncompleted matrix operation instruction.

The storage queue unit is configured to store the matrix operation instruction having a dependency on the previous operation instruction and send the matrix operation instruction to the matrix operation unit after the dependency is eliminated.

The matrix operation unit is configured to perform a matrix addition/subtraction operation on an inputting matrix according to the received matrix operation instruction;

The Scratchpad Memory is configured to store an inputting matrix and an outputting matrix.

The input-and-output access unit is configured to access the Scratchpad Memory directly, and be responsible for reading the outputting matrix from the Scratchpad Memory and writing the inputting matrix into the Scratchpad Memory.

The present disclosure also provides a method of performing a matrix addition/subtraction operation.

The disclosure can be applied to the following (including but not limited to) scenarios: data processing, robots, computers, printers, scanners, telephones, tablets, smart terminals, mobile phones, traveled recorder, navigators, sensors, cameras, cloud servers, cameras, camcorders, projectors, watches, earphones, mobile storage, wearable devices and other electronic products; aircraft, ships, vehicles and other vehicles; TV, air conditioning, microwave ovens, refrigerators, rice cookers, humidifiers, washing machines, electric lights, gas stoves, range hoods and other household appliances; and various types of medical equipment including nuclear magnetic resonance instruments, B-ultrasound, electrocardiographs.

### BRIEF DESCRIPTION OF THE DRAWINGS

FIG. 1 is a schematic structural diagram illustrating a device for executing a matrix addition/subtraction operation according to an embodiment of the present disclosure.
FIG. 2 is a schematic diagram of the operation of a matrix operation unit according to an embodiment of the present disclosure.
FIG. 3 is a schematic diagram illustrating a format of an addition/subtraction instruction set according to an embodiment of the present disclosure.
FIG. 4 is a schematic structural diagram illustrating a device for executing a matrix addition/subtraction operation according to an embodiment of the present disclosure.
FIG. 5 is a schematic flow chart illustrating a device for executing a matrix addition/subtraction operation executing a matrix addition instruction according to an embodiment of the present disclosure.
FIG. 6 is a schematic flow chart illustrating a device for executing a matrix addition/subtraction operation executing a matrix-subtracting-scalar instruction according to an embodiment of the present disclosure.

### DETAILED DESCRIPTION

Aims, technical solutions, and advantages of the present disclosure will be described more clearly with reference to the specific embodiments of the disclosure and the accompanying drawings.

The present disclosure provides a device for executing a matrix addition/subtraction operation. The device for executing a matrix addition/subtraction operation includes a storage unit, a register unit, a controlling unit, and a matrix operation unit.

The storage unit is configured to store a matrix.

The register unit is configured to store an inputting matrix address, inputting matrix length, and an outputting matrix address.

The controlling unit is configured to decode a matrix operation instruction, and control each unit according to the matrix operation instruction to control the execution process of a matrix addition/subtraction operation.

The matrix operation unit is configured to acquire an inputting matrix address, inputting matrix length, and an outputting matrix address from an instruction or the register unit, and then acquire a corresponding matrix in the storage unit according to the inputting matrix address, and then perform a matrix addition/subtraction operation according to the acquired matrix to obtain a matrix operation result.

The matrix data participating in the calculation is temporarily stored in the storage unit (for example, a Scratchpad Memory) according to the disclosure, so that data of different widths can be supported more flexibly and effectively in the matrix operation process, and the execution performance of the task including a large number of matrix addition/subtraction operations can be improved.

In the present disclosure, the matrix operation unit can be implemented as a customized hardware circuit (including but being not limited to a field-programmable gate array (FPGA), a coarse grained reconfigurable architecture (CGRA), an application specific integrated circuit (ASIC), an analog circuit, a memristor, etc.).

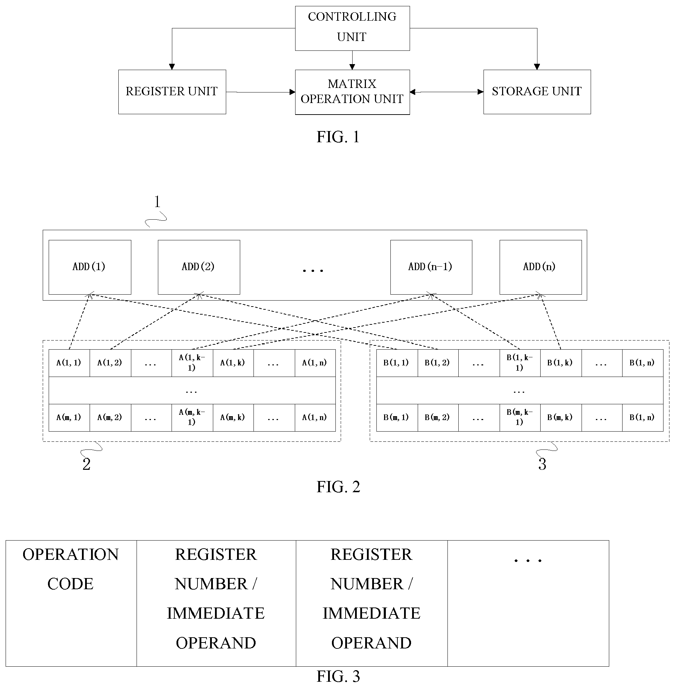

FIG. 1 is a schematic structure diagram illustrating a device for executing a matrix addition/subtraction operation according to an embodiment of the present disclosure. As illustrated in FIG. 1, the device includes a storage unit, a register unit, a controlling unit, and a matrix operation unit.

The storage unit is configured to store matrices. In one embodiment, the storage unit can be a Scratchpad Memory capable of supporting matrix data of different sizes; in the present disclosure, the necessary computational data are temporarily stored in the Scratchpad Memory to enable the computing device to more flexibly and effectively support data of different widths during matrix operations. The Scratchpad Memory can be realized by various storage devices (such as static random access memory (SRAM), dynamic random access memory (DRAM), enhanced dynamic random access memory (eDRAM), memristor, 3D-DRAM, and nonvolatile storage, etc.).

The register unit is configured to store matrix addresses. The matrix addresses are the ones where the matrices are stored in the storage unit. In one embodiment, the register unit can be a scalar register file providing a scalar register required during operations. The scalar register is configured to store an inputting matrix address, inputting matrix length, and an outputting matrix address. When matrix and scalar operations are involved, the matrix operations unit is not only to acquire a matrix address from the register unit, but also to obtain a corresponding scalar from the register unit.

The controlling unit is configured to control behaviors of various units in the device. In one embodiment, the controlling unit is configured to read prepared instructions, decode the instructions to generate a plurality of microinstructions, and transmit the microinstructions to other units in the device, so that the other units can perform corresponding operations according to the obtained microinstructions.

The matrix operation unit is configured to acquire various matrix addition/subtraction operation instructions, acquire a matrix address from the register unit according to the instruction, acquire a corresponding matrix in the storage unit according to the matrix address, and then perform an operation according to the acquired matrix to obtain a result of the matrix operation, and store the result of the matrix operation in the Scratchpad Memory. The matrix operation unit is responsible for all matrix addition/subtraction operations of the device, including but not limited to matrix adding operations, matrix subtracting operations, matrix-adding-scalar operations, and matrix-subtracting-scalar operations. The matrix addition/subtraction instruction is sent to the matrix operation unit. All operation units are parallel vector operation units and can perform the same operation on a entitle column of data at the same timer.

FIG. 2 is a schematic diagram of the operation of a matrix operation unit according to an embodiment of the present disclosure. As illustrated in the FIG. 2, 1 represents a vector operator composed of a plurality of scalar operators, 2 represents storage of the matrix A in the Scratchpad Memory, and 3 represents storage of the matrix B in the Scratchpad Memory. Both matrices are m*n matrices. The width of the vector operator is k, that is, the vector operator can calculate the addition/subtraction result of the vector of length k at a time. Each time the operator obtains vector data of length k from the matrix A and the matrix B, performs addition/subtraction operations in the operator, and writes the result back. A complete matrix addition/subtraction operation may require several calculations as described above. As illustrated in FIG. 2, the matrix addition/ subtraction component (matrix operation unit) includes a plurality of parallel scalar addition/subtraction operators. In the process of performing matrix addition/subtraction operations, the operation unit sequentially reads data of a certain length for two matrices of specified sizes, and the length is equal to the number of scalar addition/subtraction operators. Corresponding data performs addition/subtraction operations in corresponding scalar operators, each time a part of the matrix data is calculated, and finally the addition/subtraction operation of the entire matrix is completed.

In the process of performing matrix-adding/subtracting-scalar operation, the operation unit expands scalar data read into the register into vector data of the same width as the number of scalar operators. The vector data is regarded as one input of addition/subtraction, and the other input is the same as the aforementioned process of executing matrix addition/subtraction, that is matrix data of a certain length read from the Scratchpad Memory. Addition/subtraction operations is performed with the vector extended from the scalar.

According to an embodiment of the present disclosure, the device for executing a matrix addition/subtraction operation further includes an instruction cache unit. The instruction cache unit is configured to store a matrix operation instruction to be executed. During the execution of the instruction, the instruction is also buffered in the instruction cache unit. When an instruction is executed, the instruction will be submitted.

According to an embodiment of the present disclosure, the controlling unit of the device further includes an instruction queue unit. The instruction queue unit is configured to store sequentially the decoded matrix operation instructions, and send the matrix operation instruction and scalar data to a dependency processing unit, after obtaining the scalar data required for the matrix operation instruction.

According to an embodiment of the present disclosure, the controlling unit of the device further includes a dependency relationship processing unit. The dependency relationship processing unit is configured to determine whether the operation instruction has a dependency on a previous uncompleted matrix operation instruction before the matrix operation unit acquires the instruction. For example the dependency relationship processing unit is configured to determine whether the operation instruction and the previous uncompleted matrix operation instruction access to the same matrix storage address. If yes, the operation instruction is sent to the storage queue unit, and after the previous operation instruction is completed, the operation instruction in the storage queue is sent to the matrix operation unit; otherwise, the operation instruction is directly sent to the matrix operation unit. Specifically, when the matrix operation instruction needs to access the Scratchpad Memory, the previous and the current (successive) instructions may access the same block of storage space. In order to ensure the correctness of the instruction execution result, when it is detected that the current instruction has a dependency on the data of the previous instruction, the current instruction will wait in the storage queue until the dependency is eliminated.

According to an embodiment of the present disclosure, the controlling unit of the device further includes a storage queue unit. The unit includes an ordered queue. The instruction having a dependency on the data of the previous instruction is stored in the ordered queue until the dependency is eliminated. After the dependency is eliminated, the operation instruction is sent to the matrix operation unit.

According to an embodiment of the present disclosure, the device further includes an input-and-output unit. The input-and-output unit is configured to store the matrix in the storage unit or acquire an operation result from the storage unit. The input-and-output unit can directly access the storage unit, and is responsible for reading the matrix data from the memory to the storage unit or writing the matrix data from the storage unit to the memory.

During the execution of the matrix operation by the device, the device fetches the instruction for decoding, and then sends the decoded instruction to the instruction queue unit for storage. According to the decoding result, each parameter in the instruction is obtained. The parameters can be directly written in the operation field of the instruction, or can be read from the specified register according to the register number in the instruction operation field. The advantage of storing parameters by using register is that only the value of the register needs to be changed by the instruction instead of the instruction itself being changed, which makes it possible to realize most of the loops and greatly save the number of instructions required to solve some practical problems. After all operands, the dependency relationship processing unit determines whether the data actually required by the instruction has a dependency on data of the previous instruction, which determines whether the instruction can be immediately sent to the matrix operation unit for execution. Once it is detected that the data actually required by the instruction has a dependency on data of the previous instruction, the instruction will wait until the instruction it depends on has been executed before the instruction can be sent to the matrix operation unit for execution. In the customized matrix operation unit, the instruction can be executed quickly, and the result, that is, the generated result matrix, is written back to the address provided by the instruction, and then the instruction is completed.

FIG. 3 is a schematic diagram illustrating a format of an addition/subtraction instruction according to an embodiment of the present disclosure. As illustrated in FIG. 3, the matrix addition/subtraction operation instruction includes an operation code and at least one operation field. The operation code is configured to indicate a function of the matrix operation instruction. The matrix operation unit can perform different matrix operations by identifying the operation code. The operation field is configured to indicate data information of the matrix operation instruction. The data information can be an immediate operand or a register number. For example, to acquire a matrix, matrix starting address and matrix length can be obtained from a corresponding register according to the register number, and then the matrix stored in the corresponding address can be obtained from the storage unit according to the matrix starting address and the matrix length.

There are several matrix addition/subtraction instructions in the following.

Matrix addition instruction (MA). According to the instruction, the device fetches matrix data with a specified size from a specified address of the Scratchpad Memory to perform matrix addition operation in the matrix operation unit, and writes the result back into a specified address of the Scratchpad Memory; it should be noted that vector can be stored as a matrix of a specific form (with only one row of elements) in the Scratchpad Memory.

Matrix subtraction instruction (MS). According to the instruction, the device fetches matrix data with a specified size from a specified address of the Scratchpad Memory to perform matrix subtraction operation in the matrix operation unit, and writes the result back into a specified address of the Scratchpad Memory; it should be noted that vector can be stored as a matrix of a specific form (with only one row of elements) in the Scratchpad Memory.

Matrix-adding-scalar instruction (MAS). According to the instruction, the device fetches matrix data with a specified size from a specified address of the Scratchpad Memory and fetches scalar data from a specified address of the scalar register file to perform matrix-adding scalar operations in the matrix operation unit, and writes the result back into a specified address of the Scratchpad Memory. It should be noted, the scalar register file not only stores the matrix address, but also the scalar data.

Matrix-subtracting-scalar instruction (MSS). According to instruction, the device fetches matrix data with a specified size from a specified address of the Scratchpad Memory and fetches scalar data from a specified address of the scalar register file to perform matrix-subtracting-scalar operations in the matrix operation unit, and writes the result back into a specified address of the Scratchpad Memory, and writes the result back into a specified address of the Scratchpad Memory. It should be noted that the scalar register file stores not only the matrix address but also the scalar data.

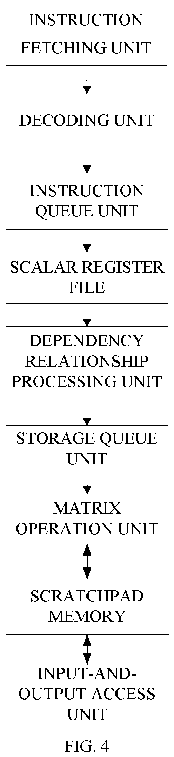

FIG. 4 is a schematic structural diagram illustrating a device for executing a matrix addition/subtraction operation according to an embodiment of the present disclosure. As illustrated in FIG. 4, the device for executing a matrix addition/subtraction operation includes an instruction fetching unit, a decoding unit, an instruction queue unit, a scalar register file, a dependency relationship processing unit, a storage queue unit, a matrix operation unit, a Scratchpad Memory, and an input-and-output access unit.

The instruction fetching unit is responsible for fetching the next instruction to be executed from the instruction sequence and transmitting the instruction to the decoding unit.

The decoding unit is responsible for decoding the instruction and transmitting the decoded instruction to the instruction queue unit.

The instruction queue unit is configured to temporarily store the decoded matrix operation instruction, obtain scalar data associated with the operation of the matrix operation instruction from the matrix operation instruction or a scalar register file; to send the matrix operation instruction to a dependency relationship processing unit after obtaining the scalar data;

The scalar register file is configured to provide the device with scalar register required in calculation. The scalar register file includes a plurality of scalar registers and the scalar register file is configured to store the scalar data associated with the matrix operation instruction.

The dependency relationship processing unit is responsible for processing a possible storage dependency relationship between an instruction to be processed and its previous instruction. The matrix operation instruction would access the Scratchpad Memory and successive instructions may access the same memory space. That is, the dependency relationship processing unit will detect whether a storage range of inputting data of a current instruction overlaps with a storage range of outputting data of an instruction that has not been completed before. It indicates that the current instruction logically needs to use a calculation result of the previous instruction when the storage range of the inputting data of the current instruction overlaps with the storage range of the outputting data of an instruction that has not been completed before, so the current instruction must wait to be executed until the previous instructions that the current instruction depends on is completed. In this process, the current instruction is actually temporarily stored in the following storage queue. To ensure the correctness of an execution result of the instruction, the current instruction, if detected to have a dependency relationship with data of the previous instruction, must wait within the storage queue until such dependency relationship is eliminated.

The storage queue is a unit with a sequential queue. An instruction having a dependency relationship with the previous instruction in terms of data is stored in such a queue until the dependency relationship is eliminated.

The matrix operation unit is configured to perform a matrix addition/subtraction operation on the matrix.

The Scratchpad Memory is a temporary storage device specialized for matrix data, and capable to support matrix data of different sizes. The Scratchpad Memory is mainly configured to store an inputting matrix and an outputting matrix.

An 10 memory access unit is configured to directly access the Scratchpad Memory, and to read or write data from or into the Scratchpad Memory.

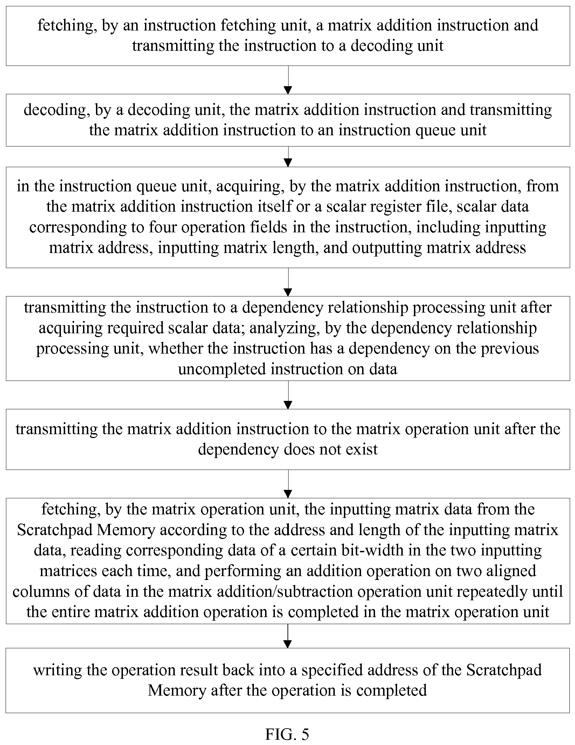

Fig. 5 is a flowchart illustrating the process that a device for executing a matrix addition/subtraction operation provided in the embodiments of the present disclosure executes a matrix-multiplying-vector instruction. As illustrated in Fig. 5, the process of performing the matrix-multiplying-vector instruction includes the follows.

S1: the instruction fetching unit fetches the matrix addition instruction and transmits the instruction to the decoding unit.

S2: the decoding unit decodes the matrix addition instruction, and transmits the matrix addition instruction to the instruction queue unit.

S3: In the instruction queue unit, the matrix addition instruction acquires, from the matrix addition instruction itself or a scalar register file, scalar data corresponding to four operation fields in the instruction, including inputting matrix address, inputting matrix length, and outputting matrix address.

S4: after acquiring the required scalar data, the instruction is transmitted to the dependency relationship processing unit. The dependency relationship processing unit analyzes whether the instruction has a dependency on the previous uncompleted instruction on data. When the instruction has a dependency on the previous uncompleted instruction on data, the instruction needs to wait in the storage queue until it has no dependency relationship on data with the previous uncompleted instruction.

S5: after the dependency relationship does not exist, the matrix addition instruction is transmitted to the matrix operations unit.

S6, the matrix operation unit fetches the inputting matrix data from the Scratchpad Memory according to the address and length of the inputting matrix data, reads corresponding data of a certain bit-width in the two inputting matrices each time, and perform an addition operation on two aligned columns of data in the matrix addition/subtraction operation unit repeatedly until the entire matrix addition operation is completed in the matrix operation unit.

S7, having completed the operation, the device writes the operation result back into a specified address of the Scratchpad Memory.

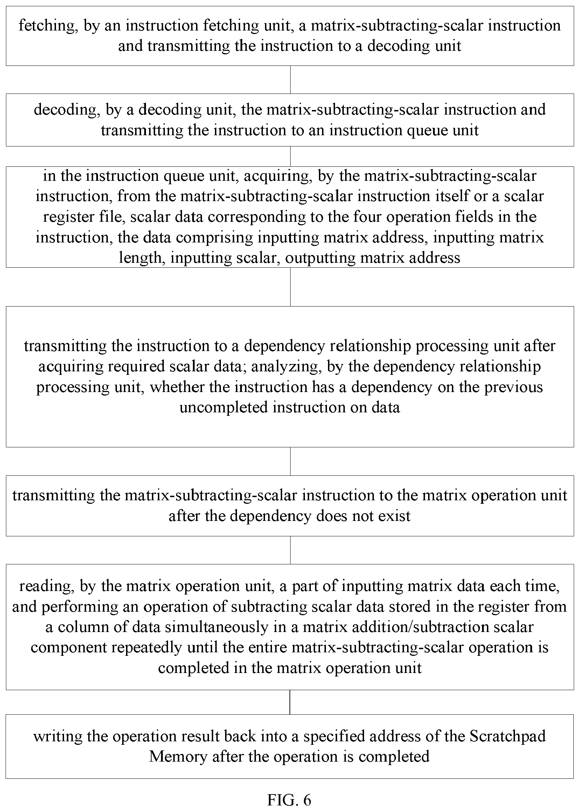

Fig. 6 is a flowchart illustrating the process that a device for executing a matrix addition/subtraction operation provided in the embodiments of the present disclosure executes a matrix-subtracting-scalar instruction. As illustrated in Fig. 6, the process of performing the matrix-subtracting-scalar instruction includes the follows.

S1: the instruction fetching unit fetches the matrix-subtracting-scalar instruction and transmits the instruction to the decoding unit.

S2: the decoding unit decodes the matrix-subtracting-scalar instruction, and transmits the instruction to the instruction queue unit.

S3: In the instruction queue unit, the matrix-subtracting-scalar instruction acquires, from the matrix-subtracting-scalar instruction itself or a scalar register file, data corresponding to four operation fields in the instruction, including inputting matrix address, inputting matrix length, inputting scalar, outputting matrix address.

S4: after acquiring required scalar data, the instruction is sent to the dependency relationship processing unit. The dependency relationship processing unit analyzes whether the instruction has a dependency on the previous uncompleted instruction on data. When the instruction has a dependency on the previous uncompleted instruction on data, the instruction needs to wait in the storage queue until it has no dependency relationship on data with the previous uncompleted instruction.

S5: after the dependency relationship does not exist, the matrix-multiplying-scalar instruction is transmitted to the matrix operation unit.

S6, the matrix operation unit reads a part of inputting matrix data each time, and performs an operation of subtracting scalar data stored in the register from a column of data simultaneously in a matrix addition/subtraction scalar component repeatedly until the entire matrix-subtracting-scalar operation is completed in the matrix operation unit.

S7, having completed the operation, the device writes the operation result back into a specified address of the Scratchpad Memory.

As such, the present disclosure provides a device for executing a matrix addition/subtraction operation, cooperating with corresponding instructions, for offering a solution to the problem in the related art where more and more algorithms involve a large number of matrix operations. Different from the traditional solutions, the present disclosure features such advantages as easy to use, supportive in various matrices and sufficient on-chip cache. The present disclosure is useful in many computing tasks involving numerous matrix addition/subtraction operations.

While the disclosure has been illustrated by reference to specific embodiments, it should be understood that the disclosure is intended not to be limited by the foregoing description, but to be defined to perform the examples thereof. In other words, any modification, equivalent replacement or improvement thereof should all fall into the protection scope of the present disclosure.

## Claims

1. A device for executing a matrix addition/subtraction operation, comprising:
a storage unit, configured to store matrix data associated with a matrix operation instruction;
a register unit, configured to store scalar data associated with the matrix operation instruction;
a controlling unit, configured to decode the matrix operation instruction and control the operation process of the matrix operation instruction; and
a matrix operation unit, configured to perform a matrix addition/subtraction operation on an inputting matrix according to the decoded matrix operation instruction; the matrix operation unit being a customized hardware circuit.

2. The device of claim 1, wherein the scalar data stored in the register unit comprises an address of an inputting matrix associated with the matrix operation instruction, an inputting matrix length, an outputting matrix address, scalar data used in the matrix addition/subtraction operation.

3. The device of claim 1, wherein the controlling unit comprises:
an instruction queue unit, configured to store sequentially the decoded matrix operation instruction and acquire the scalar data associated with the matrix operation instruction.

4. The device of claim 1, wherein the controlling unit comprises:
a dependency relationship processing unit, configured to determine whether a current matrix operation instruction has a dependency on a previous uncompleted matrix operation instruction before the matrix operation unit acquires the current matrix operation instruction.

5. The device of claim 4, wherein the controlling unit comprises:
a storage queue unit, configured to temporarily store the current matrix operation instruction when the current matrix operation instruction has a dependency on the previous uncompleted matrix operation, and send the temporarily stored matrix operation instruction to the matrix operation unit when the dependency is eliminated.

6. The device of any of claims 1 to 5, further comprising:
an instruction cache unit, configured to store a matrix operation instruction to be executed; and
an input-and-output unit, configured to store vector data associated with the matrix operation instruction in the storage unit, or acquire a operation result of the matrix operation instruction from the storage unit.

7. The device of claim 1, wherein the matrix operation instruction comprises an operation code and an operation field;
the operation code is configured to indicate execution of a matrix operation; and
the operation field comprises an immediate operand and/or a register number, and is configured to indicate scalar data associated with a matrix operation, and the register number is configured to point to the address of the register unit

8. The device of any of claims 1 to 5 and claim 7, wherein the storage unit is a Scratchpad Memory.

9. The device of any of claims 1 to 5 and claim 7, wherein
the matrix operation unit comprises a plurality of parallel scalar addition/subtraction operators;
in the process of performing matrix addition/subtraction operations, the matrix operation unit sequentially reads data of a certain length for two inputting matrix of specified sizes, the length is equal to the number of scalar addition/subtraction operators, corresponding data is performed addition/subtraction operations in corresponding scalar operators, each time a part of matrix data is calculated, and finally the addition/subtraction operation of the entire matrix is completed;
in the process of performing matrix-adding/subtracting-scalar operation, the device firstly fetches scalar data from the instruction according to the instruction or from a scalar register file according to a register number provided by the instruction, and transmits the scalar data to the matrix operation unit, the matrix operation unit expands the scalar into vector data of a width which is the same to the number as the scalar operators, the vector data is regarded as one input of the scalar addition/subtraction operator, the other input is matrix data of a certain length read from the storage unit, and the other input is performed an addition/subtraction operation with the vector data expanded from the scalar.

10. A device for executing a matrix addition/subtraction operation, comprising:
an instruction fetching unit, configured to fetch a matrix operation instruction to be executed next time from an instruction sequence, and transmit the matrix operation instruction to a decoding unit;
the decoding unit, configured to decode the matrix operation instruction and transmit the decoded matrix operation instruction to an instruction queue unit;
the instruction queue unit, configured to temporarily store the decoded matrix operation instruction, obtain scalar data associated with the operation of the matrix operation instruction from the matrix operation instruction or a scalar register; to send the matrix operation instruction to a dependency relationship processing unit after obtaining the scalar data;
the scalar register file, comprising a plurality of scalar registers, configured to store the scalar data associated with the matrix operation instruction;
the dependency relationship processing unit, configured to determine whether the matrix operation instruction has a dependency on a previous uncompleted matrix operation instruction; to send the matrix operation instruction to a storage queue unit if the matrix operation instruction has a dependency on the previous uncompleted matrix operation instruction; to send the matrix operation instruction to a matrix operation unit if the matrix operation instruction dose not have a dependency on the previous uncompleted matrix operation instruction;
the storage queue unit, configured to store the matrix operation instruction having a dependency on the previous operation instruction and send the matrix operation instruction to the matrix operation unit after the dependency is eliminated;
the matrix operation unit, configured to perform a matrix addition/subtraction operation on an inputting matrix according to the received matrix operation instruction;
a Scratchpad Memory, configured to store the inputting matrix and an outputting matrix;
an input-and-output access unit, configured to access the Scratchpad Memory directly, and be responsible for reading the outputting matrix from the Scratchpad Memory and writing the inputting matrix into the Scratchpad Memory.

11. The device of claim 10, wherein the matrix operation unit is a customized hardware circuit.

12. The device of claim 10, wherein the matrix operation unit comprises a plurality of parallel scalar addition/subtraction operators;
in the process of performing matrix addition/subtraction operations, the matrix operation unit sequentially reads data of a certain length for two inputting matrix of specified sizes, the length is equal to the number of scalar addition/subtraction operators, corresponding data is performed addition/subtraction operations in corresponding scalar operators, each time a part of matrix data is calculated, and finally the addition/subtraction operation of the entire matrix is completed;
in the process of performing matrix-adding/subtracting-scalar operation, the device firstly fetches scalar data from the instruction according to the instruction or from a scalar register file according to a register number provided by the matrix operation instruction, and transmits the scalar data to the matrix operation unit, and the matrix operation unit expands the scalar into vector data of a width which is the same to the number as the scalar operators, the vector data is regarded as one input of the scalar addition/subtraction operator, the other input is matrix data of a certain length read from the storage unit, the other input is performed an addition/subtraction operation with the vector data expanded from the scalar.

13. A method for performing a matrix addition operation, comprising:
S1, fetching, by an instruction fetching unit, a matrix addition instruction and transmitting the instruction to a decoding unit;
S2, decoding, by a decoding unit, the matrix addition instruction and transmitting the matrix addition instruction to an instruction queue unit;
S3, in the instruction queue unit, acquiring, by the matrix addition instruction, from the matrix addition instruction itself or a scalar register file, scalar data corresponding to four operation fields in the instruction, including inputting matrix address, inputting matrix length, and outputting matrix address;
S4, transmitting the instruction to a dependency relationship processing unit after acquiring required scalar data; analyzing, by the dependency relationship processing unit, whether the instruction has a dependency on the previous uncompleted instruction on data; the instruction needing to wait in the storage queue until it has no dependency on the data on the previous uncompleted instruction when the instruction has a dependency on the previous uncompleted instruction on data;
S5, transmitting the matrix addition instruction to the matrix operation unit after the dependency does not exist;
S6, fetching, by the matrix operation unit, the inputting matrix data from the Scratchpad Memory according to the address and length of the inputting matrix data, reading corresponding data of a certain bit-width in the two inputting matrices each time, and performing an addition operation on two aligned columns of data in the matrix addition/subtraction operation unit repeatedly until the entire matrix addition operation is completed in the matrix operation unit; and
S7, writing the operation result back into a specified address of the Scratchpad Memory after the operation is completed.

14. A method for performing a matrix-subtracting-scalar operation, comprising:
S1, fetching, by an instruction fetching unit, a matrix-subtracting-scalar instruction and transmitting the instruction to a decoding unit;
S2, decoding, by a decoding unit, the matrix-subtracting-scalar instruction and transmitting the instruction to an instruction queue unit;
S3, in the instruction queue unit, acquiring, by the matrix-subtracting-scalar instruction, from the matrix-subtracting-scalar instruction itself or a scalar register file, scalar data corresponding to the four operation fields in the instruction, the data comprising inputting matrix address, inputting matrix length, inputting scalar, outputting matrix address;
S4, transmitting the instruction to a dependency relationship processing unit after acquiring required scalar data; analyzing, by the dependency relationship processing unit, whether the instruction has a dependency on the previous uncompleted instruction on data; the instruction needing to wait in the storage queue until it has no dependency on the data with the previous uncompleted instruction when the instruction has a dependency on the previous uncompleted instruction on data;
S5, transmitting the matrix-multiplying-scalar instruction to the matrix operation unit after the dependency does not exist;
S6, reading, by the matrix operation unit, a part of inputting matrix data each time, and performing an operation of subtracting scalar data stored in the register from a column of data simultaneously in a matrix addition/subtraction scalar component repeatedly until the entire matrix-subtracting-scalar operation is completed in the matrix operation unit; and
S7, writing the operation result back into a specified address of the Scratchpad Memory after the operation is completed.
